# EUROPEAN PATENT SPECIFICATION

(11) **EP 2 524 544 B1**
(45) Date of publication and mention of the grant of the patent: **03.10.2018**
(21) Application number: 11700530.6
(22) Date of filing: 12.01.2011
(51) Int. Cl.: H04W 48/20, H04W 16/08

(54) **A LOAD BALANCING METHOD FOR A WIRELESS COMMUNICATION SYSTEM**
LASTENAUSGLEICHVERFAHREN FÜR EIN DRAHTLOSES KOMMUNIKATIONSSYSTEM
PROCÉDÉ D'ÉQUILIBRAGE DE CHARGE POUR SYSTÈME DE COMMUNICATION SANS FIL

(30) Priority: 15.01.2010 CN 201010004258
(43) Date of publication of application: 21.11.2012
(73) Proprietor: Siemens Aktiengesellschaft, 80333 München (DE)
(72) Inventor: KUHN, Matthias, 38118 Braunschweig (DE); LAMPE, Mattias, 38304 Wolfenbuettel (DE); TIAN, Ji Feng, Beijing 100102 (CN); VORNHOLZ, Hans-Joachim, 38162 Cremlingen (DE)
(86) International application number: PCT/EP2011/050346
(87) International publication number: WO 2011/086097

(56) References cited:
- CA-A1- 2 411 954
- US-A1- 2004 039 817
- US-A1- 2004 266 474
- US-A1- 2005 152 320
- US-A1- 2007 248 033
- US-A1- 2009 274 129

## Description

### Technical field

The present invention relates to an access method for the wireless communication system, and especially relates to a load balancing method for a wireless communication system.

### Background art

In a wireless communication system, especially in a wireless local area network (WLAN), there are some mobile clients and Acess Points (AP). These Access Points are wired connected to a backbone network, and the clients roam among several Access Points. In such a system, the coverage areas of adjacent Access Points may be overlapped to a certain degree, which means some clients may be in the area covered by two or more Access Points at a given time. In addition, the following situation may happen at this moment, i.e. the service of a certain Access Point connected with some clients may be overloaded, which may exaust the radio resources of the Access Point, while the service load of its adjacent Access Point may be relatively lower. In principle, the latter can alleviate the load of said Access Point under an overload situation through sharing one or more clients with the former.

In current WLAN systems, each Access Point independently processes the association requests from the clients, and then establishes connections with said clients based on the authentication scheme. It is generally decided by the client to which Access Point the association request should be transmitted, for example, in a typical case, the client may decide the Access Point to access based on the measured values of strength of signals received from each Access Point.

In the WLAN system, since the centralized management is performed on all Access Points, the system resources can be uniformly managed to a great extent, so that the load balancing may be reached as much as possible among the Access Points of the system. However, since a complicated central control unit is required to be installed, the WLAN for performing centralized management will be expensive. Besides, in the WLAN system which performs centralized management on the Access Points, the clients may also encounter the situation of being unable to know the Access Point controller. In such a case, the client should be switched to a new Access Point. Therefore, it can be hard to distribute the clients to an Access Point by the central control unit from the point of view of clients.

US 2005/0152320 A1 discloses a wireless communication method and apparatus for balancing the loads of access points. In order to control the extent of area around an access point from which a wireless transmit/receive unit can associate to this access point, the transmission power level of the beacon and the probe response packets of the access point are controlled.

US 2009/0274129 A1 deals with distributed load balancing in wireless digital networks, wherein a client is encouraged to move to a different access node by reducing the apparent signal strength of transmissions from the access node to the client.

### Contents of the invention

The main purpose of the present invention is to provide a load balancing method for a wireless communication system, so that in the wireless communication system, the Access Point under an overload situation may be accessed by the new client with a relatively lower priority.

In order to achieve the above-mentioned purposes, the present invention proposes a load balancing method for a wireless communication system, in which said wireless communication system comprises a backbone network, more than one Access Point connected to said backbone network and more than one client, and said method comprises the following steps:
(1) said client transmits a Probe Request message to said more than one Access Point;
(2) said Access Point monitors its load; if said Access Point is under an overload situation, it will transmit a Probe Response message to said client by the minimum transmitting power, wherein said Access Point determines the minimum transmitting power of said Probe Response message based on the received signal strength indication (RSSI) determined from the received Probe Response message, and if said Access Point is under normal load situation, it will transmit a Probe Response message to said client by normal transmitting power;
(3) said client detects whether there is any Access Point under normal load situation based on the received Probe Response message, if there is, it will choose said Access Point under normal load situation to access; and if there is not, it will choose said Access Point under an overload situation to access. That is to say, the client preferentially chooses the Access Point under normal load situation to access based on the signal strength of the received Probe Respond message.

Preferably, said Access Point is considered to be under an overload situation if its load exceeds a set threshold, otherwise the Access Point is considered to be under normal load situation.

Preferably, said minimum transmitting power is the minimum power needed for reliably transmitting said Probe Response message to said client.

Preferably, said Access Point can delay the Probe Response message for a certain period of time and then transmit it to said client.

Preferably, if said client chooses said Access Point under an overload situation to access, said Access Point may communicate with said client by normal transmitting power; alternatively, said Access Point may communicate with said client by a power lower than the normal transmitting power, said power can guarantee the reliable communication between said Access Point and said client. Its purpose is to make the client roam so as to establish connections with other Access Points.

Preferably, said wireless communication system is a wireless local area network system.

The present invention also proposes wireless network equipment, which is respectively connected with a backbone network and more than one client, said wireless network equipment monitors its load, if under an overload situation, the wireless network equipment may transmit a Probe Response message by the minimum transmitting power to said client, wherein said wireless network equipment determines the minimum transmitting power of said Probe Response message based on the received signal strength indication (RSSI) determined from the received Probe Request message, and if under normal load situation, the wireless network equipment may transmit said Probe Response message to said client by normal transmitting power.

Preferably, said wireless network equipment is the Access Point in the wireless local area network.

The present invention provides a simple load balancing method for a wireless communication system, in which the client can prevent itself from accessing to the Access Point under an overload situation if there are other Access Points under normal load situation to choose; and the client can access to the Access Point under an overload situation if there are no Access Points under normal load situation to choose, that is to say, the present method of invention provides the client with a priority of the Access Points, in which the Access Point under an overload situation has a lower priority. Moreover, the present method of invention is easy to implement in the drive section of the Access Point, and there is no need to make any alterations for the client. Compared with the 802.11 Standard of WLAN, the present invention does not need any extra hardware, nor any extra wired or wireless communication resources.

### Brief Description of the Drawings

The following section will make a further detailed description of the embodiments of the present invention in combination with the figures, wherein,
Figure 1 shows the flow chart of an embodiment of the load balancing method for wireless communication systems of the present invention;
Figure 2 shows the flow chart of an alternative load balancing method for wireless communication systems;
Figure 3 shows a schematic diagram of applications of the load balancing method for wireless communication systems of the present invention.

### Embodiments

The following part will take the wireless local area network WLAN as an example and make an explaination of the load balancing method for a wireless communication system of the present invention.

According to Protocol IEEE 802.11, in the current WLAN system, the default steps of switched access by the clients through active scanning are as follows:
Firstly, when the client wants to perform scanning or switching, it will firstly transmit a Probe Request message to the Access Point within its area, the Probe Request message will be sent out in forms of broadcast packets, and all Access Points within the area of the client will receive the message.
Secondly, each Access Point will transmit a Probe Response message to the clients after they recieve the Probe Request messages from the clients, and the message is a one-to-one unicast packet.

Subsequently, the client will measure the received signal strength indication RSSI of each Access Point within its area in accordance with the received Probe Response message, and determine which Access Point should be connected based on said received signal strength indication RSSI, generally the Access Point with the strongest received signal strength indication RSSI will be chosen.

Finally, in order to establish the connection, the client will transmit an association request to the Access Point which is determined to be connected with it; if the Access Point receiving the association request does not want to establish the connection with the client, it will reject the association request, otherwise it will perform the authentication step to establish the connection.

In contrast to the refusal of association requests of the client made by the Access Point in said prior art, the core concept of the present invention lies in the fact that, when an Access Point is under an overload situation, it may set itself as an Access Point which is accessed with "low priority". In this way, when an client has other optional access points, the client may not attempt to establish connections with the Access Point which is accessed with "low priority".

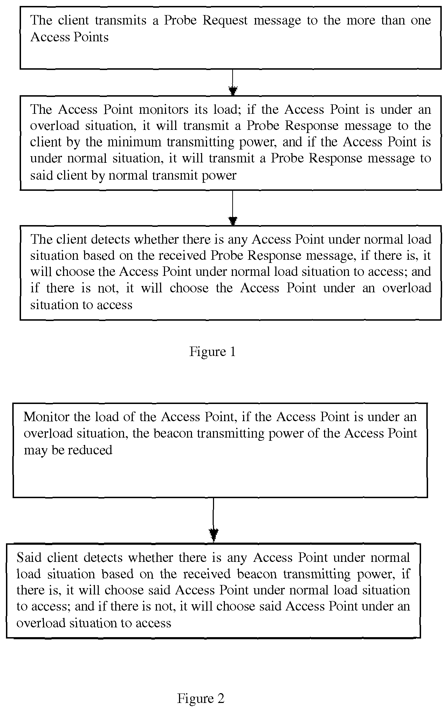

When the client does not have other optional access points, it may still establish connections with the Access Point which is accessed with "low priority". Figure 1 shows the flow chart of an embodiment of the load balancing method for wireless communication systems of the present invention, and its specific implementation procedures are as follows:
Firstly, when the client wants to perform switching, it will firstly transmit a Probe Request message to the Access Point within its area, the Probe Request message will be sent out in the form of broadcast packets, and all Access Points within the area of the client will receive the message.
Secondly, the Access Point will transmit a Probe Response message to the clients after they recieve the Probe Request messages from the clients, and the message is a one-to-one unicast packet. Monitoring the load of said Access Point, if the Access Point is under an overload situation, it will transmit a Probe Response message to said client by the minimum transmitting power, and if the Access Point is under normal load situation, it will transmit a Probe Response message to said client by normal transmitting power.

For those Access Points under an overload situation, in case of a symmetric channel, the Access Point will determine the received signal strength indication RSSI from the Probe Request messages transmitted by the client, and then determine the minimum transmitting power P_{T,min} needed for achieving reliable communications with clients in its transmitted Probe Response messages.

Subsequently, the above-mentioned Access Point under an overload situation will transmit the Probe Response messages by the minimum transmitting power P_{T,min}. Herein, the minimum transmitting power P_{T,min} is lower than the normal transmitting power of the Access Point. Moreover, the Access Point can delay the Probe Response message for a certain period of time and then transmit it to said client.
After that, the client receives the Probe Response messages from all the Access Points having received the probe requests, and preferentially chooses the Access Point under normal load situation based on the signal strength of the received Probe Response messages. The client receives the Probe Response messages from the above-mentioned Access Points under an overload situation, the received signal strength indication RSSI of the Probe Response message is slightly higher than the threshold of the received signal strength indication RSSI received by the clients, therefore when switching, the client will consider the Access Point as the candidate with low priority. That is to say, if there are other Access Points in the area of the client, and these Access Points are not under an overload situation, the received signal strength indication RSSI of these Access Points received by the client will be higher than the received signal strength indication RSSI of the above-mentioned Access Points under an overload situation, and the client will preferentially choose one of these Access Points as the switching target. If there is no Access Point in the area of the client, the client may only choose said Access Point under an overload situation with low priority.

Finally, if the connection is established between the client and said Access Point under an overload situation, the Access Point may communicate with the client by normal transmitting power. Alternatively, the Access Point may communicate with the client by a power lower than the normal transmitting power, said power can guarantee the reliable communication between said Access Point and said client. However, for clients having established connections with the Access Point, the Access Point can communicate with it by normal transmitting power or a power lower than the normal transitting power.

Figure 2 shows the flow chart of an alternative load balancing method for wireless communication systems, which is suitable for the client to perform the switching access through passive scanning.

First, each Access Point monitors its loads, and if overload is found at a certain moment, for example, exceeding a set threshold, the Access Point will reduce its own beacon transmitting power. In this way, when the client performs passive scannings, it will find the beacon transmitting power of the Access Point is lower than the beacon transmitting powers of other Access Points; therefore, the Access Point will be taken into consideration as the Access Point with low priority.

Although said Access Point reduces the beacon transmitting power, the beacon transmitting power should still be maintained at a certain level, so that the client which has already established its connection with the Access Point can detect sufficient beacon power and then perform reliable communications, so that the connection between the Access Point and the client with established connections is broken off due to the reduction in the beacon power of the access point.

The client detects whether there is any Access Point under normal load situation based on the received beacon transmitting power, if there is, it will choose the Access Point under normal load situation to access; and if there is not, it will choose the Access Point under an overload situation to access.

If the client chooses said Access Point under an overload situation to access, the Access Point may communicate with the client by normal transmitting power. Alternatively, the Access Point may communicate with the client by a power lower than normal transmitting power, said power can guarantee the reliable communication between said Access Point and said client. However, for clients having established connections with the Access Point, the Access Point can communicate with it by normal transmitting power or the power lower than the normal transitting power.

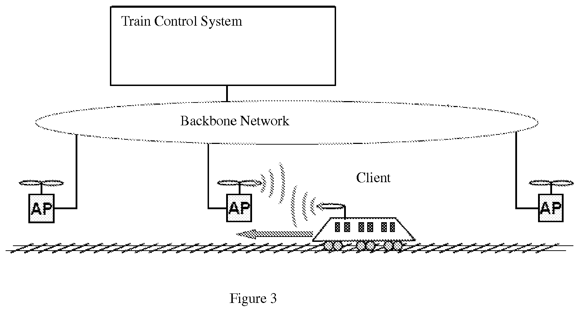

Figure 3 shows a schematic diagram of applications of the load balancing method for wireless communication systems of the present invention, in which a WLAN network-based railway communication system for railway control or passenger information is given. The Access Points are arranged along the railway, and the clients on the train may switch from one Access Point to another during its movement along the railway. In a typical case, the design of the network is a redundancy design, which means there are a plurality of wireless interfaces respectively on each train and each Access Point, and coverage areas which are partially overlapped are found between adjacent Access Points, in this way, the Access Points can work on different channels. At a given time, a train can observe several Access Points, therefore, a client may have several alternative Access Points to switch. When switching, the methods in above-mentioned embodiment may be applied.

The wireless network equipment in the present invention is preferred to be the Access Point in the WLAN network. The Access Point is connected with the backbone network, and is respectively connected with more than one client. The Access Point in the WLAN network monitors its own load, if under an overload situation, the Access Point will transmit a Probe Response message by the minimum transmitting power to the client which has transmitted the Probe Request messages to it, and if under normal load situation, the Access Point will transmit said Probe Response message to said client by normal transmitting power. As an alternative, the Access Point in the WLAN network monitors its own load, if the Access Point is under an overload situation, the beacon transmitting power of said Access Point will be reduced.

The above are only preferred embodiments of the present invention, and it should be noted that, for those with ordinary skills in the art, several improvements and modifications could be made without deviating from the principles of the present invention, and these improvements and modifications should also be considered as being within the protection range of the present invention.

## Claims

1. A load balancing method for a wireless communication system, in which said wireless communication system comprises a backbone network, more than one Access Point (AP) connected to said backbone network and more than one client, **characterized in that** said method comprises the following steps:
(1) said client transmits a Probe Request message to said more than one Access Point (AP);
(2) said Access Point (AP) monitors its load, if said Access Point (AP) is under an overload situation, it will transmit a Probe Response message to said client by the minimum transmitting power, wherein said Access Point (AP) determines minimum transmitting power of said Probe Response message based on the received signal strength indication RSSI determined from the received Probe Request message, and if said Access Point (AP) is under normal load situation, it will transmit said Probe Response message to said client by normal transmitting power;
(3) said client detects whether there is any Access Point (AP) under normal load situation based on the received Probe Response message, if there is, it will choose said Access Point (AP) under normal load situation to access; and if there is not, it will choose said Access Point (AP) under an overload situation to access.

2. The load balancing method for a wireless communication system as claimed in claim 1, **characterized in that** said Access Point (AP) is considered to be under an overload situation if its load exceeds a set threshold, otherwise the Access Point (AP) is considered to be under normal load situation.

3. The load balancing method for a wireless communication system as claimed in claim 1 or 2, **characterized in that** said Access Point (AP) delays the Probe Response message for a certain period of time and then transmits it to said client.

4. The load balancing method for a wireless communication system as claimed in any one of claims 1 to 3, **characterized in that** if said client chooses said Access Point (AP) under an overload situation to access, said Access Point (AP) may communicate with said client by normal transmitting power; or, said Access Point (AP) may communicate with said client by a power lower than the normal transmitting power, said power can guarantee the reliable communication between said Access Point (AP) and said client.

5. The load balancing method for a wireless communication system as claimed in any one of claims 1 to 4, **characterized in that** said wireless communication system is a wireless local area network system.

6. Wireless network equipment which is respectively connected with a backbone network and more than one client, **characterized in that** said wireless network equipment is arranged to monitor its load, and if under an overload situation, the wireless network equipment is arranged to transmit a Probe Response message by minimum transmitting power to said client, wherein said wireless network equipment is arranged to determine the minimum transmitting power of said Probe Response message based on the received signal strength indication RSSI determined from the received Probe Request message, and if under normal load situation, the wireless network equipment is arranged to transmit said Probe Response message to said client by normal transmitting power.

7. The wireless network equipment as claimed in claim 6, **characterized in that** said wireless network equipment is the Access Point (AP) in the wireless local area network.

## Patentansprüche

1. Lastenausgleichverfahren für ein drahtloses Kommunikationssystem, in dem das drahtlose Kommunikationssystem ein Backbone-Netzwerk umfasst, mehr als ein Zugangspunkt (Access Point; AP) und mehr als ein Client mit dem Backbone-Netzwerk verbunden sind, **dadurch gekennzeichnet, dass** das Verfahren die folgenden Schritte umfasst:
(1) der Client sendet eine Sondierungsanfrage ("Probe Request")-Nachricht an den mehr als einen Zugangspunkt;
(2) der Zugangspunkt (AP) überwacht seine Last, und wenn sich der Zugangspunkt (AP) in einer Überlastungssituation befindet, sendet er eine Sondierungsanfrage-Nachricht mit der minimalen Sendeleistung an den Client, wobei der Zugangspunkt (AP) die minimale Sendeleistung der Sondierungsanfrage-Nachricht basierend auf der empfangenen Signalstärkeangabe (received signal strength indication, RSSI) festlegt, die anhand der empfangenen Sondierungsanfrage-Nachricht ermittelt wird, und falls sich der Zugangspunkt (AP) in einer normalen Belastungssituation befindet, sendet er die Sondierungsanfrage-Nachricht mit normaler Sendeleistung an den Client;
(3) der Client erkennt anhand der empfangenen Sondierungsanfrage-Nachricht, ob sich ein Zugangspunkt (AP) in einer normalen Belastungssituation befindet, und wenn dem so ist, wählt er den Zugangspunkt (AP) in normaler Belastungssituation für den Zugang aus; andernfalls wählt er den Zugangspunkt (AP) in einer Überlastungssituation für den Zugang aus.

2. Lastenausgleichverfahren für ein drahtloses Kommunikationssystem nach Anspruch 1, **dadurch gekennzeichnet, dass** Zugangspunkt (AP) als in einer Überlastungssituation befindlich betrachtet wird, wenn seine Belastung einen vorgegebenen Grenzwert überschreitet, und andernfalls als in einer normalen Belastungssituation befindlich betrachtet wird.

3. Lastenausgleichverfahren für ein drahtloses Kommunikationssystem nach Anspruch 1 oder 2, **dadurch gekennzeichnet, dass** Zugangspunkt (AP) die Sondierungsanfrage-Nachricht für einen bestimmten Zeitraum verzögert und dann an den Client sendet.

4. Lastenausgleichverfahren für ein drahtloses Kommunikationssystem nach einem der Ansprüche 1 bis 3, **dadurch gekennzeichnet, dass**, wenn der Client den Zugangspunkt (AP) in einer Überlastungssituation für den Zugang auswählt, der Zugangspunkt (AP) mit normaler Sendeleistung mit dem Client kommunizieren kann; oder der Zugangspunkt (AP) mit einer geringeren als der normalen Sendeleistung mit dem genannten Client kommunizieren kann, wobei die Leistung die zuverlässige Kommunikation zwischen dem Zugangspunkt (AP) und dem Client gewährleisten kann.

5. Lastenausgleichverfahren für ein drahtloses Kommunikationssystem nach einem der Ansprüche 1 bis 4, **dadurch gekennzeichnet, dass** das drahtlose Kommunikationssystem ein drahtloses lokales Netzwerksystem ist.

6. Drahtlose Netzwerkausrüstung, die jeweils mit einem Backbone-Netzwerk und mehr als einem Client verbunden ist, **dadurch gekennzeichnet, dass** die genannte drahtlose Netzwerkausrüstung dafür eingerichtet ist, ihre Last zu überwachen, und die drahtlose Netzwerkausrüstung, wenn sie sich in einer Überlastungssituation befindet, dafür eingerichtet ist, eine Sondierungsanfrage-Nachricht mit minimaler Sendeleistung an den Client zu senden, wobei die drahtlose Netzwerkausrüstung dafür eingerichtet ist, die minimale Sendeleistung der Sondierungsanfrage-Nachricht basierend auf der empfangenen Signalstärkeangabe RSSI festzulegen, die anhand der empfangenen Sondierungsanfrage-Nachricht ermittelt wurde, und die drahtlose Netzwerkausrüstung, wenn sie sich in einer normalen Belastungssituation befindet, dafür eingerichtet ist, die Sondierungsanfrage-Nachricht mit normaler Sendeleistung an den Client zu senden.

7. Drahtlose Netzwerkausrüstung nach Anspruch 6, **dadurch gekennzeichnet, dass** die genannte drahtlose Netzwerkausrüstung der Zugangspunkt (AP) in dem drahtlosen lokalen Netzwerk ist.

## Revendications

1. Procédé d'équilibrage de charge pour un système de communication sans fil, dans lequel le système de communication sans fil comprend un réseau de base, plus d'un point (AP) d'accès connecté au réseau de base et plus d'un client, **caractérisé en ce que** le procédé comprend les stades suivants :
1) le client transmet un message de demande de test au plus d'un point (AP) d'accès;
2) le point (AP) d'accès contrôle sa charge, si le point (AP) d'accès est dans une situation de surcharge, il transmettra un message de réponse de test au client par la puissance de transmission minimum, le point (AP) d'accès déterminant la puissance de transmission minimum du message de réponse de test sur la base de l'indication RSSI d'intensité du signal reçu, déterminée à partir du message de demande de test et, si le point (AP) d'accès est dans une situation de charge normale, il transmettra le message de réponse de test au client par la puissance de transmission normale;
3) le client détecte s'il y a un point (AP) d'accès dans une situation de charge normale, sur la base du message de réponse de test reçu, s'il y en a un, il choisira d'accéder au point (AP) d'accès en situation de charge normale, s'il n'y en a pas, il choisira d'accéder au point d'accès en situation de surcharge.

2. Procédé d'équilibrage de charge pour un système de communication sans fil tel que revendiqué à la revendication 1, **caractérisé en ce que** le point (AP) d'accès est considéré comme étant en une situation de surcharge si la charge dépasse un seuil fixé, sinon, le point (AP) d'accès est considéré en situation de charge normale.

3. Procédé d'équilibrage de charge pour un système de communication sans fil tel que revendiqué à la revendication 1 ou 2, **caractérisé en ce que** le point (AP) d'accès retarde le message de réponse de test pendant un certain laps de temps, puis le transmet au client.

4. Procédé d'équilibrage de charge pour un système de communication sans fil tel que revendiqué à l'une quelconque des revendications 1 à 3, **caractérisé en ce que**, si le client choisit d'accéder au point (AP) d'accès en situation de surcharge, le point (AP) d'accès peut communiquer avec le client par une puissance de transmission normale ou le point (AP) d'accès peut communiquer avec le client par une puissance plus petite que la puissance de transmission normale, cette puissance pouvant garantir la communication fiable entre le point (AP) d'accès et le client.

5. Procédé d'équilibrage de charge pour un système de communication sans fil tel que revendiqué à l'une quelconque des revendications 1 à 4, **caractérisé en ce que** le système de communication sans fil est un système de réseau local sans fil.

6. Equipement de réseau sans fil, qui est connecté respectivement à un réseau principal et à plus d'un client, **caractérisé en ce que** l'équipement de réseau sans fil est agencé pour contrôler sa charge et, s'il est dans une situation de surcharge, l'équipement de réseau sans fil est agencé pour transmettre un message de réponse de test par une puissance de transmission minimum au client, l'équipement de réseau sans fil étant agencé pour déterminer la puissance de transmission minimum du message de réponse de test sur la base de l'indication RSSI d'intensité du signal reçu, déterminée à partir du message de demande de test reçu et, s'il est en situation de charge normal, l'équipement de réseau sans fil est agencé pour transmettre le message de réponse de test au client par une puissance de transmission normale.

7. Equipement de réseau sans fil tel que revendiqué à la revendication 6, **caractérisé en ce que** l'équipement de réseau sans fil est le point (AP) d'accès au réseau local sans fil.
